# NEUE EUROPÄISCHE PATENTSCHRIFT

(11) **EP 1 584 383 B2**
(45) Veröffentlichungstag und Bekanntmachung des Hinweises auf die Entscheidung über den Einspruch: **06.11.2013**
(45) Hinweis auf die Patenterteilung: 22.10.2008
(21) Anmeldenummer: 05006677.8
(22) Anmeldetag: 26.03.2005
(51) Int. Cl.: B21C 37/18, B21D 5/08, B21D 5/01

(54) **Verfahren und Vorrichtung zur Herstellung von Profilen mit in Längsrichtung veränderlichem Querschnitt**
Method and apparatus for making profiles with varying cross-section in the longitudinal direction
Procédé et dispositif pour la fabrication de profilés à section variable dans la direction longitudinale

(30) Priorität: 06.04.2004 DE 102004017343
(43) Veröffentlichungstag der Anmeldung: 12.10.2005
(60) Teilanmeldung: 07010423.7
(73) Patentinhaber: Muhr und Bender KG, 57439 Attendorn (DE)
(72) Erfinder: Hauger, Andreas, Dr.-Ing., 57439 Attendorn (DE); Kopp, Reiner, Prof. Dr.-Ing., 52074 Aachen (DE); Wiedner, Christoph, Dipl.-Ing., 6832 Sulz (AT)
(74) Vertreter: Neumann, Ernst Dieter

(56) Entgegenhaltungen:
- EP-B1- 1 272 291
- DD-C- 137 896
- DE-A1- 10 149 381
- DE-A1- 19 604 357
- DE-A1- 19 720 109
- DE-C2- 19 831 047
- DE-U1- G 8 712 526
- US-A- 3 452 424
- US-A- 4 971 239
- US-A- 5 237 846
- PATENT ABSTRACTS OF JAPAN Bd. 009, Nr. 038 (M-358), 19. Februar 1985 (1985-02-19) -& JP 59 179228 A (SHIRAKI KINZOKU KOGYO KK), 11. Oktober 1984 (1984-10-11)

## Beschreibung

Die Erfindung betrifft ein Verfahren zur Herstellung von Profilen mit in Längsrichtung veränderlichem Querschnitt gemäß dem Oberbegriff des Anspruchs 1. Aus der DE 196 04 368 C2 ist ein Verfahren zur Herstellung eines Rohres mit Abschnitten unterschiedlicher Querschnittkonfiguration bekannt, bei dem eine Platine in Form der Abwicklung des späteren Rohres mit einem rechteckigen Basisbereich und sich daran anschließenden Abschnitten abweichender Breite hergestellt wird, und der Basisbereich rundgebogen wird unter Ausbildung von sich überlappenden Bereichen in den übrigen Abschnitten, wobei anschließend die übrigen Abschnitte aufgeweitet werden, um die sich überlappenden Bereiche auseinanderzuziehen. Anschließend wird
das Rohr längs einer Naht zugeschweißt.
Aus der DE 196 04 357 A1 ist ein Verfahren zur Herstellung von Rohren mit Längsabschnitten unterschiedlicher Wandstärke bekannt, bei dem ein gewalztes Blech mit in Längsrichtung unterschiedlicher Wandstärke in zwei Biegeoperationen zu einem Rohr mit in Längsrichtung im wesentlichen gleichbleibendem Querschnitt umgeformt wird.

Aus der EP 0 133 705 B1 ist ein anderes Verfahren zur Herstellung von Rohren mit in Längsrichtung unterschiedlicher Wandstärke bekannt, bei dem ebenfalls ein Ausgangsblech mit über der Länge veränderlicher Dicke in mehreren Biegeoperationen rundgebogen wird, wobei das entstehende Rohr einen konstanten Innendurchmesser haben soll.

Aus der JP59-179228 A mittels Formwalzenpaaren, die längs ihrer Achsen unterschiedliche Exzenterabschnitte tragen, die sich paarweise ergänzen, Profile mit über der Länge veränderlichem hinterschnittfrei offenem Querschnitt herzustellen. Die Seitenflanken dieser Profile sind notwendigerweise senkrecht auf einer den Boden dieser Profile enthaltenden Ebene.

Aus der US 4 971 239 A ist es bekannt, aus einem trapezförmigen Blechzuschnitt zunächst in einem ersten Biegevorgang ein U-Profil von konstanter Breite mit über der Länge konstant veränderlicher Tiefe zu formen und dann in einem zweite Biegevorgang aus dem U-Profil ein Ovalrohr mit parallelen Flanken und über der Länge konstant veränderlicher Höhe herzustellen, das danach längs verschweißt wird.

Der vorliegenden Erfindung liegt hiervon ausgehend die Aufgabe zugrunde, ein neues günstiges Verfahren zur Herstellung von Profilen mit über der Länge veränderlichem Querschnitt bereitzustellen.

Die Lösung besteht in einem Verfahren gemäß Ansprunch 1.

Nach dem Verfahren mit den vorstehend genannten erfindungsgemäßen Schritten entsteht in einem Tiefzieh-Gesenk ein offenes Profil mit über der Länge unterschiedlichem Querschnitt und vom einseitig offenen Profil abstehenden Flanschen, die vorzugsweise gerade beschnitten sind.

Zum Tiefziehen wird die Platine längs zweier paralleler Seitenbereiche in einem Tiefziehwerkzeug eingespannt, das zwei parallele Wangen und zwei die Platine einspannende Niederhalter umfaßt. Ein zwischen die Wangen einfahrbarer Stempel hat einen über der Länge veränderlichen Querschnitt, der beim Tiefziehen den entsprechenden Querschnitt des zu bildenden Profils erzeugt. Zwischen Wangen und Niederhaltern verbleiben vom offenen Profil abstehende Flansche, die durch das Fließen des Materials beim Tiefziehen verzerrt sind. Daß die vom Profil abstehenden Flansche anschließend beschnitten werden, ist erforderlich, um beim Tiefziehen unvermeidbar entstehende Unregelmäßigkeiten an den Flanschen zu beseitigen. Hierbei ist insbesondere vorgesehen, daß die Flansche parallel zur Längsrichtung gerade beschnitten werden, um integrale Teile des Profils zu bilden. Ein solches Profil kann beispielsweise zur Aussteifung eines ebenen Bleches mit den Flanschen an dieses angesetzt und mit diesem verbunden werden. Der über der Länge unterschiedliche Querschnitt des Profils kann dabei zu gezielt veränderlichen Formsteifigkeiten des ausgesteiften Bleches führen. Alternativ können die Flansche beim Beschneiden vollständig entfernt werden, so daß nur ein offener Profilbereich verbleibt.

Nach einem weiterführendem Schritt ist vorgesehen, daß das einseitig offene Profil nach dem Beschneiden der Flansche etwa parallel zur Längsrichtung in einem Biegegesenk umgeformt wird, um den Querschnitt des offenen Profils zu verändern. Auch hierbei bleibt ein Profil mit über der Länge variabler Querschnittsform erhalten. Die endgültige Form des Profils kann sich je nach Anwendungsfall aus der geforderten Festigkeit des Erzeugnisses oder aus den zur Verfügung stehenden räumlichen Verhältnissen ergeben.

Nach einer besonderen Verfahrensführung kann vorgesehen sein, daß das Profil parallel zur Längsrichtung gerade beschnitten wird und in einem Biegegesenk umgeformt wird, bis die Längskanten stumpf aneinanderstoßen, um ein im Querschnitt geschlossenes Profil mit einer geraden Nahtlinie zu bilden. Diese Nahtlinie wird anschließend verschweißt. Der rein lineare Verlauf der Nahtlinie vereinfacht die Durchführung des Schweißens, da der Schweißfokus bezüglich zweier Koordinaten während des Schweißvorganges unverändert gehalten werden kann.

Nach einer hierzu alternativen Verfahrensführung wird vorgesehen, daß das Profil in Längsrichtung mit unterschiedlicher Breite beschnitten wird und in einem Biegegesenk umgeformt wird bis die Längskanten stumpf aneinanderstoßen, um ein im Querschnitt geschlossenes Profil mit einer dreidimensional verlaufenden Nahtlinie zu bilden. Hierbei kann das im Tiefzieh-Gesenk hergestellte einseitig offene Profil durch die vom Biegegesenk vorgegebene Form zu einem symmetrischen Profil umgeformt werden, so daß ein zumindest zu einer Mittellängsebene symmetrischer Profilkörper, vorzugsweise ein axialsymmetrischer Profilkörper entsteht. Dieser wird anschließend längs seiner räumlichen Nahtlinie verschweißt. Die Nahtlinie verläuft hierbei allerdings so im Raum, daß beim Verschweißen der Schweißfokus zumindest entlang zweier Koordinaten variiert werden muß, wobei diese bevorzugt in einer Radialebene durch die Längsachse liegen.

Neben der durch die Formgebung gezielt eingestellten variablen Festigkeit des Profils kann eine weitere Beeinflussung der Biege- oder Torsionsfestigkeit des Profils dadurch erfolgen, daß eine Platine mit in Längsrichtung variabler Dicke oder eine Platine mit senkrecht zur Längsrichtung variabler Dicke als Ausgangsmaterial verwandt wird. Als Platinen werden hierbei sogenannte Tailor Rolled Blanks verwendet, die beispielsweise aus Bandmaterial abgelängt werden können, das nach dem sogenannten flexiblen Walzen hergestellt ist. Die erfindungsgemäß hergestellten Profile, die als tragende Teile im Kraftfahrzeugbau eingesetzt werden können, können auf diese Weise besonders günstig an die allgemeinen Festigkeitsanforderungen im Fahrzeug und im besonderen an die Festigkeitsanforderungen für den Crash- Fall angepaßt werden.

Das geschlossene Profil mit über der Länge veränderlichem Querschnitt kann nach dem Verschweißen der Längsnaht in weiteren Bearbeitungsschritten abschnittsweise im Querschnitt durch äußere Kräfte und/oder abschnittweise im Querschnitt durch innere Kräfte, insbesondere durch hydraulischen Innendruck verändert werden. Hiermit sind weitere Anpassungen an den vorliegenden Anwendungsfall möglich.

Ein bevorzugtes Ausführungsbeispiel des erfindungsgemäßen Verfahrens sowie einer zur Durchführung des Verfahrens geeigneten Vorrichtung ist in den Zeichnungen dargestellt und wird nachstehend beschrieben.

Figur 1 zeigt ein erfindungsgemäßes Tiefzieh-Gesenk in 3D- Darstellung.
- Figur 2: zeigt eine Platine nach dem Schritt des Tiefziehens.
- Figur 3: zeigt die Platine nach Figur 2 nach dem Schritt des Beschneidens der Flansche.
- Figur 4: zeigt ein ergänzendes Biegegesenk in 3D-Darstellung.
- Figur 5: zeigt die Platine nach Figur 5 nach dem Rundbiegen zum geschlossenen Profil.

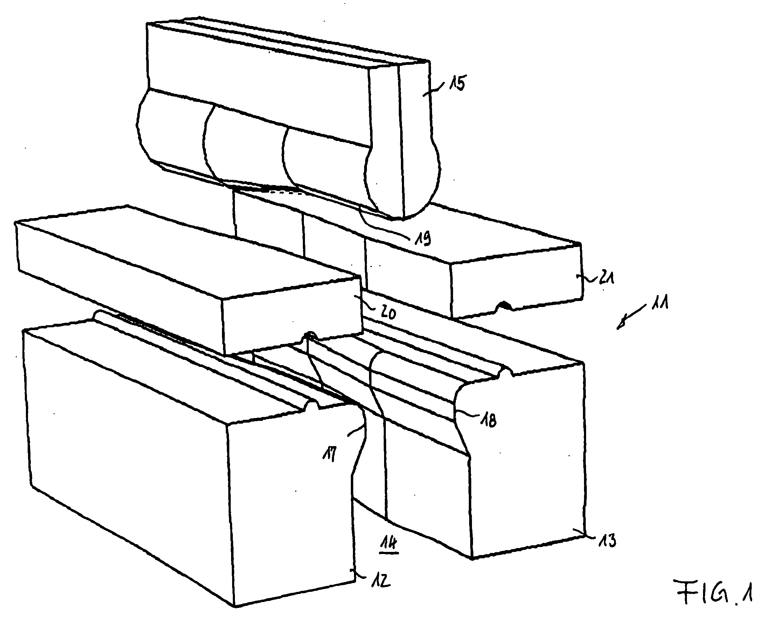

In Figur 1 ist ein Tiefziehwerkzeug (erstes Gesenk) 11 gezeigt, bestehend aus einem Gesenk, das zwei durch ihre Oberfläche dargestellte Wangen 12,13 umfaßt, zwischen denen ein tiefer länglicher Spalt 14 gebildet ist, sowie einem im wesentlichen länglichen Stempel 15, der mit horizontaler Längsstreckung vertikal in den Spalt 14 hinein verfahrbar ist. Die Längserstreckung des Spaltes 14 und die Längserstreckung des Stempels 15 geben in der weiteren Beschreibung die Längsrichtung des Werkstücks vor. Die Wangen 12,13 haben in den Spalt 14 ragende Vorsprünge 17,18, denen eingezogene Seitenflanken am Stempel 15 entsprechen. Weiterhin hat der Stempel 15 auf der Unterseite eine Einziehung 19. Der Spalt 14 ist nach unten offen und der Form des Stempels 15 nicht angepaßt. Auf der Oberseite der Wangen 12,13 sind Ziehleisten 22,23 ausgebildet. Oberhalb der Wangen 12, 13 sind Niederhalter 20, 21 gezeigt, die an der Unterseite Ausnehmungen 32, 33 haben, die den Ziehleisten 22, 23 ergänzend entsprechen. Auf eine auf die Wangen 12, 13 aufgelegte Platine werden die Niederhalter 20, 21 vor dem Niederdrücken des Stempels 15 abgesenkt, wobei das Zusammenwirken der Ziehleisten 22, 23 und der Ausnehmungen 32, 33 den Einlaufwiderstand der Platine erhöht und eine Faltenbildung verhindert. Dies führt zu einer verbesserten Maßhaltigkeit.

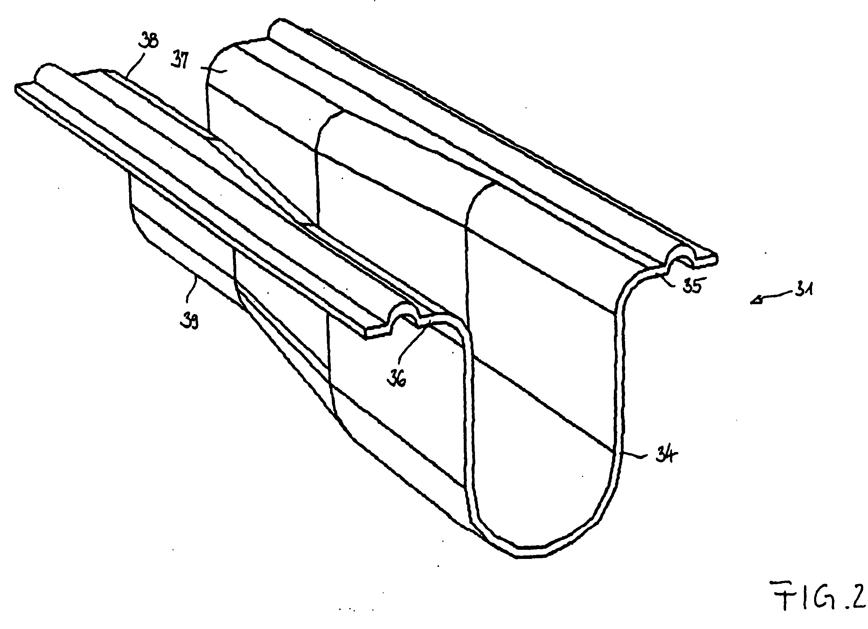

In Figur 2 ist ein einseitig offenes Profil 31 nach dem erfindungsgemäßen Tiefziehen, gegebenenfalls nach einem einzigen Tiefziehschritt mit einem Werkzeug nach Figur 1 gezeigt. Das Profil 31 hat hierbei einen wesentlichen U-förmigen Profilbereich 34 mit über der Länge veränderlichem Querschnitt sowie zwei davon etwa rechtwinklig abstehende Flansche 35,36. Entsprechend den Vorsprüngen 17,18 des Unterwerkzeuges hat das Profil seitlich eingezogene Zargen 37,38 sowie entsprechend der Einziehung 19 des Stempels 15 einen Profilabschnitt 39 mit geringerer Tiefe.

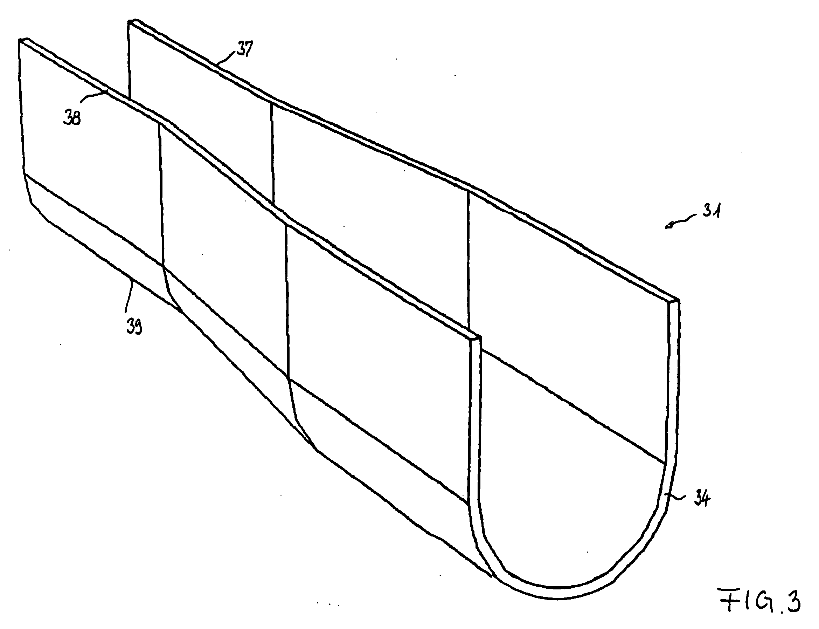

In Figur 3 ist die zum offenen Profil 31 umgeformte Platine nach Figur 2 nach dem erfindungsgemäßen Beschneiden der überstehenden Flansche dargestellt. Im vorliegenden Beispiel sind die Flansche vollständig entfernt worden. Es verbleibt nur noch der im wesentlichen U-förmige Profilbereich 34, an dem der Profilabschnitt 39 geringerer Tiefe sowie die seitlich eingezogenen Zargen 37,38 zu erkennen sind.

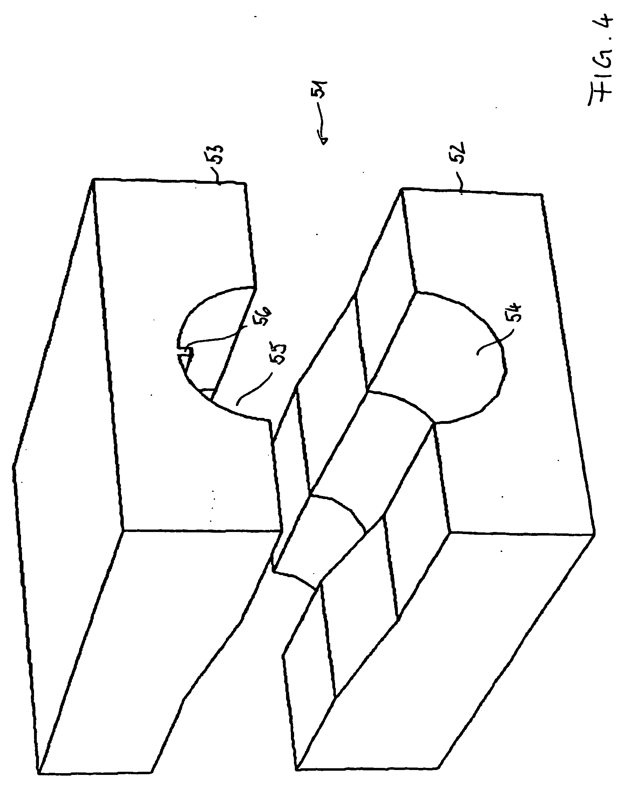

In Figur 4 ist ein Biegegesenk (zweites Gesenk) 51 mit einem Unterwerkzeug 52 und einem zugehörigen Oberwerkzeug 53 gezeigt, das nach Einlegen des umgeformten Profils 31 nach Figur 3 in das Unterwerkzeug 52 auf dieses abgesenkt werden kann. Im Unterwerkzeug 52 ist eine rinnenförmige Mulde 54 mit in Längsrichtung veränderlichem Radius ausgebildet, deren Basislinie abgestuft ist. Im Oberwerkzeug 53 ist eine rinnenförmige Mulde 55 mit in Längsrichtung gleichfalls veränderlichem Querschnitt ausgeformt, deren Basislinie gerade ist und eine Rippe 56 trägt. Beim Absenken des Oberwerkzeugs 53 auf das Unterwerkzeug 52 bilden beide einen röhrenförmigen Hohlraum miteinander, in dem das einseitig offene Profil nach Figur 3 zum Profil mit geschlossenem Querschnitt durch eine Biegeoperation umgeformt wird.

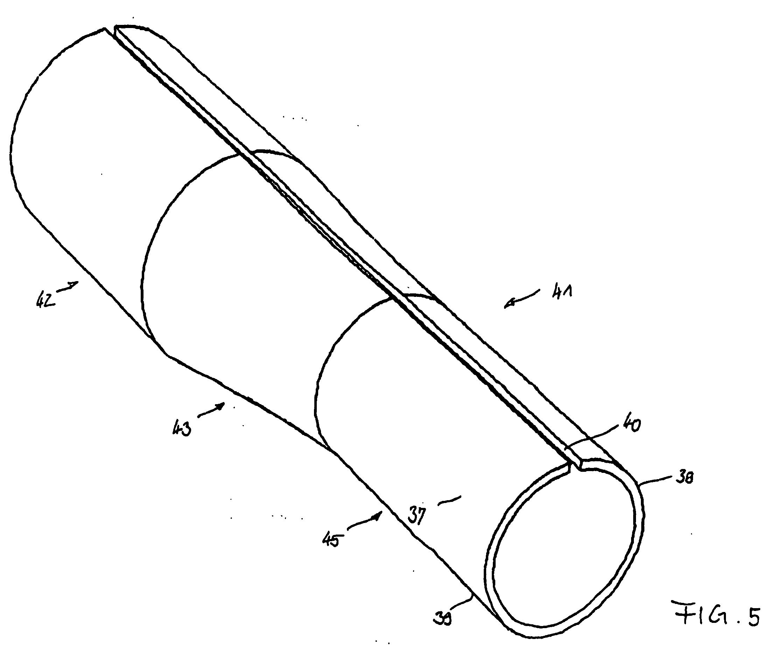

In Figur 5 ist die zum geschlossenen Profil 41 umgeformte Platine gezeigt, die in das an das offene Profil 31 angepaßte Biegegesenk 52 eingelegt worden war und mit dem Oberwerkzeug 53 frei oder über einem eingelegten Dorn zu einem geschlossenen Profil umgeformt wurde, wobei sich auf der Oberseite ein Spalt 40 gebildet hat, der in der hier gezeigten Ausführung völlig geraden Verlauf hat. Bei einer abweichenden Art der Beschneidung der Flansche und bei einer abweichenden in Form des Oberwerkzeuges kann jedoch auch ein Spalt mit einem dreidimensionalen Verlauf gebildet werden, insbesondere um ein axialsymmetrisches Profil mit über der Länge variablem Durchmesser zu bilden. Entlang des Spalts 40 kann das geschlossene Profil 41 abschließend verschweißt werden.

An dem geschlossenen Profil sind der Spalt 40, die eingezogenen Zargen 37,38 und der Abschnitt geringerer Tiefe 39 erkennbar, wodurch ein Profil mit einem größeren Endabschnitt 42, einem Übergangskonus 43 und einem kleineren Endabschnitt 45 gebildet wird.

Es ist ohne weiteres verständlich, daß auf die gleiche Weise geschlossene Profile hergestellt werden können, deren Querschnitt sich über der Länge mehrfach, insbesondere auch abwechselnd vergrößert oder verkleinert. Dabei kann eine Längssymmetrie problemlos dargestellt werden, wie sie in vielen Fällen erforderlich ist, beispielsweise für Querträger im Fahrzeugbau.

### Bezugszeichenliste

- 11: Tiefzieh-Gesenk
- 12: Wange
- 13: Wange
- 14: Spalt
- 15: Stempel
- 16:
- 17: Vorsprung
- 18: Vorsprung
- 19: Einziehung
- 20: Niederhalter
- 21: Niederhalter
- 22: Leiste
- 23: Leiste
- 31: Platine
- 32: Ausnehmung
- 33: Ausnehmung
- 34: U-Profil
- 35: Flansch
- 36: Flansch
- 37: Zarge
- 38: Zarge
- 39: Profilreduzierung
- 40: Spalt
- 41: Rohr
- 42: Rohrabschnitt (groß)
- 43: Konusabschnitt
- 44: Konusabschnitt
- 45: Rohrabschnitt (klein)
- 51: Biege-Gesenk
- 52: Werkzeugunterteil
- 53: Werkzeugoberteil
- 54: Mulde
- 55: Mulde
- 56: Rippe

## Patentansprüche

1. Verfahren zur Herstellung von Profilen mit in Längsrichtung veränderlichem Querschnitt, ausgehend vom Bereitstellen einer Platine mit in Längsrichtung des zu bildenden Profils oder mit senkrecht zur Längsrichtung des zu bildenden Profils variabler Dicke;
**gekennzeichnet durch** die Schritte:
Umformen der Platine **durch** Tiefziehen derart, daß **durch** das Tiefziehen ein einseitig offenes Profil mit in Längsrichtung veränderlichen Querschnitt und zwei vom einseitig offenen Profil abstehenden Flanschen entsteht;
Beschneiden der vom einseitig offenen Profil abstehenden Flansche wobei das einseitig offene Profil anschließend **durch** Biegeoperationen im Querschnitt verändert wird,
das Profil zu einem geschlossenen Profil mit stumpf aneinanderstoßenden Längskanten umgeformt wird,
das Profil so umgeformt wird, daß die Längskanten in einer geraden Nahtlinie oder in einer dreidimensional verlaufenden Nahtlinie stumpf aneinanderstoßen,
und wobei das Profil **durch** Verschweißen entlang der Nahtlinie im Querschnitt geschlossen wird.

2. Verfahren nach Anspruch 1,
**dadurch gekennzeichnet,**
**daß** durch das Tiefziehen der im wesentlichen U-förmiger Profilbereich mit davon etwa rechtwinklig abstehenden Flanschen gebildet wird.

3. Verfahren nach einem der Ansprüche 1 oder 2,
**dadurch gekennzeichnet,**
**daß** die Flansche beim Beschneiden vollständig entfernt werden.

4. Verfahren nach einem der Ansprüche 1 bis 3,
**dadurch gekennzeichnet,**
**daß** das geschlossene Profil durch äußere Kräfte zumindest abschnittsweise im Querschnitt verformt wird.

5. Verfahren nach einem der Ansprüche 1 bis 3,
**dadurch gekennzeichnet,**
**daß** das geschlossene Profil durch Innendruck zumindest abschnittsweise im Querschnitt verformt wird.

## Claims

1. A process of producing profiles whose cross-section varies in the longitudinal direction, starting with providing a sheet metal blank, having a variable thickness along the longitudinal direction or perpendicular to the longitudinal direction of the profile to be formed,
**characterised by** the following process stages:
forming the sheet metal blank by deep drawing such that, by deep drawing, a unilaterally open profile is obtained, having a variable cross-section in the longitudinal direction and having two flanges which project from the unilaterally open profile;
cutting the flanges projecting from the unilaterally open profile;
the cross-section of the unilaterally open profile is subsequently changed by bending operations;
the profile is formed into a closed profile with abutting longitudinal edges;
the profile is formed such that the longitudinal edges abut one another in a straight or in a three-dimensionally extending seam line and the cross-section of the profile is closed by being welded along the seam line.

2. A process according to claim 1,
**characterised in**
**that**, as a result of the deep drawing operation, the substantially U-shaped profile region with flanges which project therefrom at an approximately right angle is formed.

3. A process according to any one of claims 1 or 2,
**characterised in**
**that**, during the cutting operation, the flanges are removed completely.

4. A process according to any one of claims 1 to 3,
**characterised in**
**that** the closed profile is deformed at least portionwise by external forces.

5. A process according to any one of claims 1 to 3,
**characterised in**
**that** the closed profile is deformed at least portionwise by internal pressure.

## Revendications

1. Procédé de fabrication de profilés à section transversale variable dans la direction longitudinale, à partir de la mise à disposition d'une plaque ou d'un flan présentant une épaisseur variable dans la direction longitudinale du profilé à former ou perpendiculairement à la direction longitudinale du profilé à former; **caractérisé par** les étapes:
formage de la plaque par emboutissage profond de façon à ce qu'il résulte de l'emboutissage profond un profilé ouvert d'un côté, présentant une section transversale variable dans la direction longitudinale et deux flasques s'écartant du profilé ouvert d'un côté;
coupe des flasques s'écartant du profilé ouvert d'un côté;
l'on modifie ensuite en section transversale, le profilé ouvert d'un côté, par des opérations de pliage;
l'on déforme le profilé par formage en un profilé fermé avec des bords longitudinaux jointifs bout à bout;
l'on déforme le profilé par formage de manière à ce que les bords longitudinaux soient jointifs bout à bout selon une ligne de joint rectiligne ou de configuration tridimensionnelle; et l'on ferme le profilé en section transversale, par soudage le long de la ligne de joint.

2. Procédé selon la revendication 1,
**caractérisé en ce que** l'on forme par l'emboutissage profond, une zone de profilé sensiblement en forme de U dont s'écartent les flasques, sensiblement à angle droit.

3. Procédé selon l'une des revendications 1 ou 2,
**caractérisé en ce que** les flasques sont totalement retirés lors de la coupe.

4. Procédé selon l'une des revendications 1 à 3,
**caractérisé en ce que** le profilé fermé est déformé en section transversale, au moins par secteurs, par des forces extérieures.

5. Procédé selon l'une des revendications 1 à 3,
**caractérisé en ce que** le profilé fermé est déformé en section transversale, au moins par secteurs, par une pression intérieure.
